# EUROPÄISCHE PATENTSCHRIFT

(11) **EP 1 717 538 B1**
(45) Veröffentlichungstag und Bekanntmachung des Hinweises auf die Patenterteilung: **15.06.2016**
(21) Anmeldenummer: 06007870.6
(22) Anmeldetag: 13.04.2006
(51) Int. Cl.: F28F 9/00, B60K 11/04, B62D 27/06

(54) **Befestigungsanordnung eines Wärmeübertragers, insbesondere eines Kühlers für Kraftfahrzeuge**
Fixing means for a heat exchanger, especially for a radiator of vehicles
Element de fixation d'un échangeur de chaleur, en particulier pour un radiateur de véhicules

(30) Priorität: 26.04.2005 DE 102005019674
(43) Veröffentlichungstag der Anmeldung: 02.11.2006
(73) Patentinhaber: MAHLE Behr GmbH & Co. KG, 70469 Stuttgart (DE)
(72) Erfinder: Linde, Marc, 69242 Mühlhausen (DE)
(74) Vertreter: Grauel, Andreas

(56) Entgegenhaltungen:
- EP-A- 0 331 540
- GB-A- 2 262 600
- US-A1- 2003 230 397

## Beschreibung

Die Erfindung betrifft eine Befestigungsanordnung eines Wärmeübertragers, insbesondere eines Kühlers für Kraftfahrzeuge nach dem Oberbegriff des Patentanspruches 1.

Wärmeübertrager für Kraftfahrzeuge, z. B. Kühlmittelkühler oder Ladeluftkühler werden in der Regel im vorderen Bereich des Motorraumes des Kraftfahrzeuges angeordnet und befestigt. Die Befestigung erfolgt z. B. in der Weise, dass der Kühlmittelkühler oder das aus mehreren Wärmeübertragem bestehende Kühlmodul über elastische Lager gegenüber dem Fahrzeug abgestützt werden, wobei an den Sammelkästen der Kühler entsprechende Befestigungsmittel, z. B. Lagerzapfen vorgesehen sind. Sofern die Sammelkästen aus Kunststoff hergestellt sind, lassen sich Befestigungsmittel relativ einfach an den Kunststoffkästen anspritzen. Teilweise sind die Wärmeübertrager auch als Ganzaluminium-Wärmeübertrager ausgebildet und weisen metallische Sammelkästen auf, an welchen Befestigungsmittel nicht ohne weiteres angebracht werden können. Daher werden Ganzmetall-Wärmeübertrager, insbesondere Ganzaluminium-Kühler in Kunststoffhaltem oder Rahmen, welche Teile des Ganzmetall-Wärmeübertragers umfassen, aufgenommen und über die Kunststoffhalter oder Rahmen im Fahrzeug abgestützt. Probleme können bei dieser Art der Befestigung dann auftreten, wenn die Toleranzen der Kunststoffträger oder -rahmen und der Ganzmetall-Wärmeübertrager nicht hinreichend aufeinander abgestimmt sind - der Wärmeübertrager sitzt dann nicht fest im Rahmen, sondern hat Spiel, was zu Klappergeräuschen und vorzeitigem Verschleiß führt. Teilweise soll ein Kunststoffrahmen auch für verschiedene Wärmeübertragergrößen verwendet werden.

Bekannt ist auch die Anordnung von Kühlmittelkühlem im Radkasten eines Kraftfahrzeuges, insbesondere dann, wenn im Motorraum nicht genügend Bauraum für die Unterbringung eines Kühlers vorhanden ist. Die Befestigung eines Kühlers im Radkasten erfolgt dann beispielsweise über eine Kunststoffkassette, welche am Fahrzeug befestigt wird und den Kühler in sich aufnimmt. Weiterhin zeigt das Dokument EP 0 331 540 eine Befestigungsanordnung gemäß dem Oberbegriff des Patentanspruche 1.

Es ist Aufgabe der vorliegenden Erfindung, eine sichere und klapperfreie Befestigung eines Wärmeübertragers in einem Rahmen zu schaffen, wobei auch unterschiedliche Toleranzen und Größen des Wärmeübertragers ausgeglichen werden können.

Diese Aufgabe wird durch die Merkmale des Patentanspruches 1 gelöst Erfindungsgemäß ist vorgesehen, dass an einer Querstrebe des Rahmens ein verschiebbares Rastelement angeordnet ist, welches den Wärmeübertrager gegenüber dem Rahmen fixiert. Vorteilhaft hierbei ist, dass der Wärmeübertrager durch das in einer Endposition verrastbare Rastelement spielfrei gegenüber dem Rahmen gehalten ist.

Vorteilhafte Ausgestattungen der Erfindung ergeben sich aus den Unteransprüchen. Erfindungsgemäß nimmt das Rastelement vorzugsweise zwei verschiedene Positionen ein, nämlich eine Vorpositionierung, in welcher es unverlierbar mit dem Rahmen verbunden ist, und eine Rastposition, in weicher es formschlüssig mit der Querstrebe verbunden ist und den Wärmeübertrager gegen den Rahmen, vorzugsweise ein Winkelprofil presst Damit ist der Wärmeübertrager einfach - quasi ohne zusätzliche Hilfsmittel - montierbar. Vorteilhafterweise ist das Rastelement in einer Führungsbahn des Rahmens bzw. der Querstrebe geführt, und zwar etwa senkrecht zur Stirnfläche des Wärmeübertragers. Ferner weist das Rastelement erfindungsgemäß eine Rastzunge mit einer Rastnase auf, welche formschlüssig in eine Rastöffnung in der Querstrebe eingreift. Beim Verschieben aus der Vorpositionierung in die Raststellung gleitet die Rastzunge auf einer Einführschräge auf, bevor die Nase in die Rastöffnung einschnappt und den Wärmeübertrager gegenüber dem Rahmen "verriegelt". Erfindungsgemäß sind am Rastelement und an der Querstrebe des Rahmens Sägezahnprofile angebracht, welche miteinander verhakt werden können, so dass Zwischenstellungen möglich sind. Dies ist dann von Vorteil, wenn der Wärmeübertrager nach Einschnappen der Rastnase noch nicht hinreichend gegenüber dem Rahmen verspannt ist und ein verbleibendes Spiel ausgeglichen werden soll.

In weiterer vorteilhafter Ausgestaltung der Erfindung ist der Wärmeübertrager als Ganzaluminium-Kühler ausgebildet, welcher in einem Kunststoffrahmen aufgenommen ist, wobei für einen Kühlmittelkasten des Kühlers eine kastenförmige Aufnahmeöffnung vorgesehen ist Der Kühler kann somit zunächst in die kastenförmige Öffnung eingesetzt, dann beigeklappt und schließlich durch das erfindungsgemäße Rastelement fixiert und befestigt werden. Dies hat den Vorteil einer einfachen und schnellen Montage.

Ein Ausführungsbeispiel der Erfindung ist in der Zeichnung dargestellt und wird im Folgenden näher beschrieben. Es zeigen
- Fig. 1: eine Befestigungsanordnung eines Kühlers in einem Rahmen mit erfindungsgemäßem Rastelement,
- Fig. 2: einen Ausschnitt der Befestigungsanordnung mit Rastelement,
- Fig. 3: das Rastelement in der Stellung "Vorpositionierung",
- Fig. 3a: das Rastelement gemäß Fig. 3 in einem vergrößerten Ausschnitt und
- Fig. 4: das Rastelement in Rastposition.

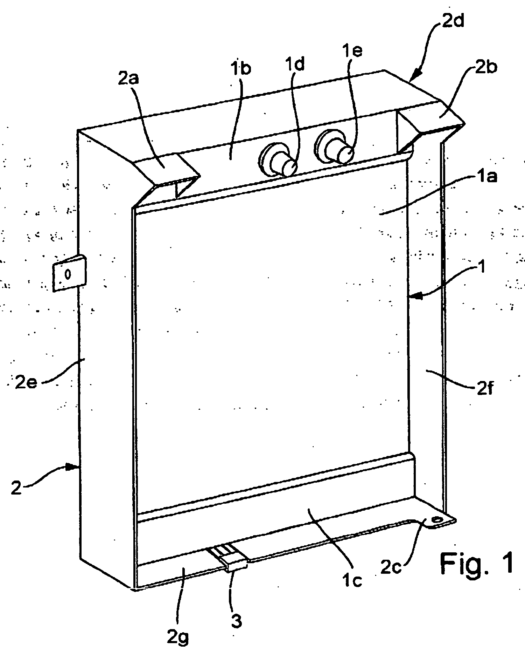

Fig. 1 zeigt einen Kühlmittelkühler 1, kurz Kühler genannt, welcher in einem Rahmen 2 aus Kunststoff aufgenommen ist. Der Rahmen 2 weist Befestigungselemente 2a, 2b, 2c, auf, über welche er an einem nicht dargestellten Kraftfahrzeug, vorzugsweise in einem Radkasten befestigt und elastisch abgestützt ist. Der Kühler 1 besteht im Wesentlichen aus einem Kühlerblock 1a sowie aus einem oberen Kühlmittelkasten 1b und einem unteren Kühlmittelkasten 1c. Der Kühlerblock 1a weist nicht dargestellte, von Kühlmittel durchströmbare Rohre und von Umgebungsluft überströmbare Rippen auf. Über Anschlussstutzen 1d, 1 e ist der Kühler 1 an einen nicht dargestellten Kühlmittelkreislauf eines Verbrennungsmotors des Kraftfahrzeuges angeschlossen. Vorzugsweise ist der Kühler 1 als gelöteter Ganzaluminium-Kühler ausgebildet. Der Rahmen 2 ist im Wesentlichen geschlossen und weist eine obere kastenförmige Traverse 2d, zwei Seitenholme 2e, 2f und eine untere Querstrebe 2g auf. Der obere Kühlmittelkasten 1b des Kühlers ist in der nach unten offenen, kastenförmigen Traverse 2d aufgenommen und liegt mit seinem unteren Kühlmittelkasten 1c auf der Querstrebe 2g auf. Ein Rastelement 3 ist an der Querstrebe 2g befestigt und fixiert den Kühler 1 im Rahmen 2. Eine genauere Darstellung und Beschreibung des Rastelementes 3 erfolgt in den nachfolgenden Figuren.

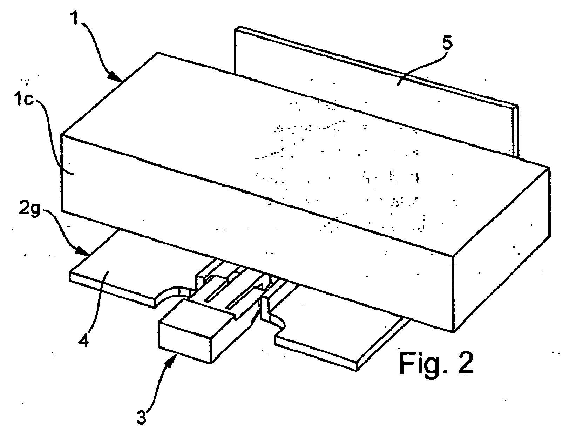

Fig. 2 zeigt einen Ausschnitt aus Fig. 1 im Bereich des Rastelementes 3, welches an der Querstrebe 2g befestigt ist. Die Querstrebe 2g ist - vorzugsweise mit dem gesamten Rahmen 2 - als Kunststoffspritzteil ausgebildet und weist ein Winkelprofil mit einem horizontalen Schenkel 4 und einem senkrechten Schenkel 5 auf, an welchem der Kühlmittelkasten 1c mit seiner Rückseite anliegt. Das Rastelement 3 befindet sich in einer Position der VorPositionierung, d. h. in einer Position, welche die Montage des Kühlers 1 zulässt. Das Einsetzen des Kühlers 1 (vgl. Fig. 1) in den Rahmen 2 erfolgt in der Weise, dass zunächst der obere Kühlmittelkasten 1b in die kastenförmige Öffnung der Traverse 2d eingesetzt und dass der Kühler 1 dann beigeklappt wird, bis der untere Kühlmittelkasten 1c an der Querstrebe 2g, insbesondere dem vertikalen Schenkel 5 des Winkelprofils anliegt. Dieses Beiklappen ist nur möglich, wenn sich das Rastelement 3 in seiner Montageposition, d. h. der so genannten Vorpositionierung befindet.

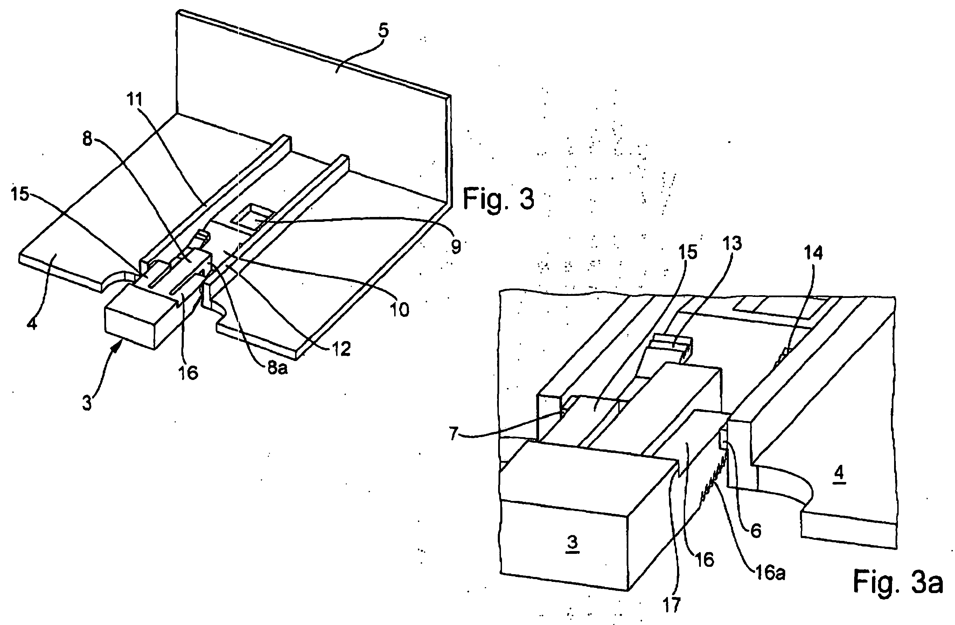

Fig. 3 zeigt einen Ausschnitt der Querstrebe 2g mit waagerechtem Schenkel 4 und senkrechtem Schenkel 5 sowie das Rastelement 3 in seiner Stellung der Vorpositionierung.

Fig. 3a zeigt einen vergrößerten Ausschnitt aus Fig. 3 für das Rastelement 3, welches über seitliche Stege 6, 7 mit dem horizontalen Schenkel 4 verbunden ist Die Stege 6, 7 bilden Sollbruchstellen zwischen Rastelement 3 und Schenkel 4 und werden abgerissen, wenn das Rastelement - nach erfolgter Montage des Kühlers 1 - in seine Endposition verschoben werden soll. Die Stege 6, 7 dienen also nur der vorübergehenden Halterung des Rastelementes 3, d. h. seiner griffbereiten Bereitstellung für die Montage. Das Rastelement 3 weist eine federnde Rastzunge 8 mit einer nach unten gerichteten Rastnase bzw. Rasthaken 8a auf, welcher in eine Rastöffnung 9 im Schenkel 4 eingreifen kann. Zwischen dem Rasthaken 8a und der Rastöffnung 9 ist eine Einführschräge 10 vorgesehen, auf welcher der Rasthaken 8a bei Verschiebung des Rastelementes 3 in Richtung Rastöffnung 9 aufgleitet, wobei die Rastzunge 8 federnd nach oben ausgelenkt wird. Am horizontalen Schenkel 4 sind zwei parallel verlaufende Führungsschienen 11, 12 sowie Sägezahnprofile 13, 14 angeordnet. Das Rastelement 3 weist beiderseits der Rastzunge 8 Rastfinger 15, 16 auf, welche an ihren Unterseiten ebenfalls Sägezahnprofile 16a besitzen, welche in die Sägezahnprofile 13, 14 der Querstrebe 2g eingreifen können. Schließlich weist das Rastelement 3 einen Anschlag 17 auf, mit dem es am Kühler 1 bzw. dem unteren Kühlmittelkasten 1c zur Anlage kommt. Die Sägezahnprofile 13, 14 kommen mit den Sägezahnprofilen der Rastfinger 15, 16 dann in Eingriff, wenn die Rastnase 8a in die Rastöffnung 9 eingeschnappt ist und wenn das Rastelement 3 noch weiter gegen den Kühler bzw. den senkrechten Schenkel bewegt werden kann. Dies kann insbesondere dann eintreten, wenn nach Einrasten des Rasthakens 8a noch Spiel zwischen Rastelement und Kühlmittelkasten 1 c (vgl. Fig. 2) besteht Dann wird das Rastelement 3 zur Erhöhung der Vorspannung weiter verschoben, bis der Anschlag 17 fest und ohne Spiel am Kühlmittelkasten 1 c anliegt. Damit ist die Endposition des Rastelementes 3 und gleichzeitig eine formschlüssige Verriegelung erreicht.

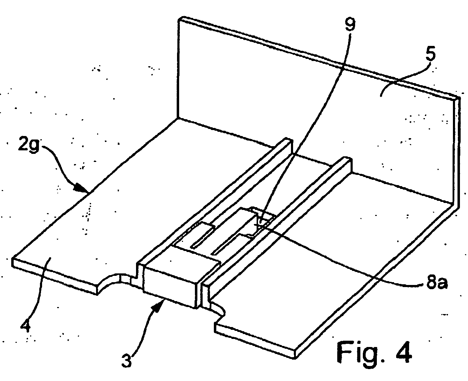

Fig. 4 zeigt das Rastelement 3 in der oben erwähnten End- oder Rastposition, in welcher der Rasthaken 8a in die Rastöffnung 9 eingeschnappt ist und eine formschlüssige Verriegelung zwischen Rastelement 3 und dem horizontalen Schenkel 4 der Querstrebe 2g bewirk. Die in Fig. 3, 3a dargestellten Verbindungsstege 6, 7 sind zur Erreichung der Endposition abgerissen, d. h. das Rastelement 3 ist jetzt nicht mehr einstückig mit dem Schenkel 4 verbunden und kann - bei Demontage des Kühlers 1- durch Lösen der Rastnase 8a entfemt werden.

Die Verwendung des erfindungsgemäßen Rastelements 3 ist nicht auf das, dargestellte Ausführungsbeispiel, insbesondere die in der Zeichnung dargestellte Position des Kühlers - als Fallstromkühler - beschränkt. Vielmehr ist es auch möglich, den Kühler um 90 Grad zu verdrehen und ihn als Querstromkühler, d. h. mit seitlich angeordneten Kühlmittelkästen im Rahmen anzuordnen. Das erfindungsgemäße Rastelement 3 würde dann nicht gegen einen Kühlmittelkasten, sondern beispielsweise gegen ein Seitenteil des Kühlers drücken und ihn auf die gleiche Weise im Rahmen fixieren.

## Patentansprüche

1. Befestigungsanordnung eines Wärmeübertragers (1) mit einem Rahmen, insbesondere eines Kühlers für Kraftfahrzeuge in einem Rahmen (2), wobei der Wärmeübertrager (1) einen Block (1 a) aus Rohren und Rippen sowie Sammelkästen (1 b, 1 c) aufweist, wobei der Rahmen (2) eine Querstrebe (2g) mit einem Winkelprofil (4, 5) aufweist, dass ein Teil des Wärmeübertragers (1), insbesondere der Sammelkasten (1c) durch das Winkelprofil (4, 5) gehalten und durch ein mit der Querstrebe (2g) verbundenes, verschiebbares Rastelement (3) gesichert ist, wobei das Rastelement (3) von einer ersten Position zur Vorpositionierung in eine zweite Position zur Verrastung verschiebbar ist und das Rastelement (3) in der ersten Position zur Vorpositionierung durch Stege (6, 7) mit der Querstrebe (2g) verbunden, insbesondere als Kunststoffspritzteil ausgebildet ist und das Rastelement (3) eine Rastzunge (8) mit einer Rastnase (8a) und die Querstrebe (2g) eine Rastöffnung (9) aufweist, wobei die Rastzunge (8) mit ihrer Rastnase (8a) in der Rastöffnung (9) verrastbar ist, die Querstrebe (2g) eine Einführschräge (10) aufweist auf der die Rastnase (8a) vor dem Verrasten aufgleitet, **dadurch gekennzeichnet, dass** am Rastelement (3), vorzugsweise beiderseits der Rastzunge (8) und an der Querstrebe (2g), Sägezahnprofile (13, 14, 15, 16, 16a) angeordnet sind, welche einen zusätzlichen Formschluss bilden.

2. Befestigungsanordnung nach Anspruch 1, **dadurch gekennzeichnet, dass** die Querstrebe (2g) Führungsschienen (11, 12) aufweist, innerhalb welcher das Rastelement (3) verschiebbar ist.

3. Befestigungsanordnung nach einem der Ansprüche 1 bis 2, **dadurch gekennzeichnet, dass** das Rastelement (3) einen Anschlag (17) aufweist, welcher am Wärmeübertrager (1, 1 c) abstützbar ist.

4. Befestigungsanordnung nach einem der Ansprüche 1 bis 3, **dadurch gekennzeichnet, dass** der Rahmen (2) aus Kunststoff herstellbar und der Wärmeübertrager (1) als Ganzmetall-, vorzugsweise Ganzaluminium-Wärmeübertrager ausgebildet ist.

5. Befestigungsanordnung nach einem der Ansprüche 1 bis 4, **dadurch gekennzeichnet, dass** der Rahmen (2) eine Traverse (2d) mit einer kastenförmigen Öffnung aufweist, in welcher der erste Sammelkasten (1 b) des Wärmeübertragers (1) aufgenommen ist, und dass der zweite Sammelkasten (1c) durch das Winkelprofil (4, 5) der Querstrebe (2g) und das Rastelement (3) gehalten ist.

## Claims

1. A mounting arrangement of a heat exchanger (1) with a frame, in particular of a radiator for motor vehicles within a frame (2), wherein the heat exchanger (1) includes a block (1a) of pipes and fins as well as collecting boxes (1b, 1c), wherein the frame (2) has a cross strut (2g) with an angle section (4, 5) and a part of the heat exchanger (1), in particular the collecting box (1c), is held by the angle section (4, 5) and secured by a movable latching element (3) connected to the cross strut (2g), wherein the latching element (3) is movable from a first position for pre-positioning to a second position for latching, and the latching element (3) is connected to the cross strut (2g) by webs (6, 7), in particular formed as a plastic injection-moulded part, in the first position for pre-positioning, and the latching element (3) has a latching tongue (8) with a latching lug (8a) and the cross strut (2g) has a latch opening (9), wherein the latching tongue (8) can be latched within the latch opening (9) with its latching lug (8a) and the cross strut (2g) has an insertion chamfer (10) on which the latching lug (8a) slides prior to latching, **characterised in that** sawtooth sections (13, 14, 15, 16, 16a) are arranged on the latching element (3), preferably on both sides of the latching tongue (8), and on the cross strut (2g), providing additional form fit.

2. The mounting arrangement according to claim 1, **characterised in that** said cross strut (2g) has guide rails (11, 12) within which the latching element (3) is moveable.

3. The mounting arrangement according to any one of claims 1 to 2, **characterised in that** the latching element (3) has a stop (17) which is abutable with the heat exchanger (1, 1c).

4. The mounting arrangement according to any one of claims 1 to 3, **characterised in that** said frame (2) can be made of plastic and said heat exchanger (1) is formed as an all-metal, preferable all-aluminium, heat exchanger.

5. The mounting arrangement according to any one of claims 1 to 4, **characterised in that** said frame (2) has a cross member (2d) with a box-shaped opening to receive the first collecting box (1b) of the heat exchanger (1), and that the second collecting box (1c) is held by the angle profile (4, 5) of the cross strut (2g) and the latching element (3).

## Revendications

1. Agencement de fixation d'un échangeur de chaleur (1) comportant un cadre, en particulier d'un radiateur pour des véhicules automobiles, fixé dans un cadre (2), où l'échangeur de chaleur (1) présente un bloc (1a) se composant de tubes et d'ailettes ainsi que de bacs collecteurs (1b, 1c), où le cadre (2) présente une entretoise transversale (2g) comportant une cornière (4, 5), où une partie de l'échangeur de chaleur (1), en particulier le bac collecteur (1c), est tenue par la cornière (4, 5) et fixée par un élément d'encliquetage (3) déplaçable et relié à l'entretoise transversale (2g), où l'élément d'encliquetage (3) peut être déplacé, passant d'une première position servant au prépositionnement, à une seconde position servant à l'encliquetage, et l'élément d'encliquetage (3), dans la première position servant au prépositionnement, est relié à l'entretoise transversale (2g) par des barrettes (6, 7) formant des entretoises, ledit élément d'encliquetage étant conçu en particulier comme une pièce en matière plastique, moulée par injection, et l'élément d'encliquetage (3) présente une languette d'encliquetage (8) comportant un ergot d'encliquetage (8a), l'entretoise transversale (2g) présentant une ouverture d'encliquetage (9), où la languette d'encliquetage (8) peut être encliquetée par son ergot d'encliquetage (8a) dans l'ouverture d'encliquetage (9), où l'entretoise transversale (2g) présente une partie d'insertion inclinée (10) sur laquelle l'ergot d'encliquetage (8a) glisse avant l'encliquetage, **caractérisé en ce que** des profils en dents de scie (13, 14, 15, 16, 16a) sont disposés sur l'élément d'encliquetage (3), de préférence des deux côtés de la languette d'encliquetage (8) et sur l'entretoise transversale (2g), profils en dents de scie qui constituent une complémentarité de forme supplémentaire.

2. Agencement de fixation selon la revendication 1, **caractérisé en ce que** l'entretoise transversale (2g) présente des rails de guidage (11, 12) à l'intérieur desquels peut être déplacé l'élément d'encliquetage (3).

3. Agencement de fixation selon l'une des revendications 1 à 2, **caractérisé en ce que** l'élément d'encliquetage (3) présente une butée (17) qui peut venir en appui sur l'échangeur de chaleur (1, 1c).

4. Agencement de fixation selon l'une quelconque des revendications 1 à 3, **caractérisé en ce que** le cadre (2) peut être fabriqué en matière plastique et l'échangeur de chaleur (1) étant conçu comme un échangeur de chaleur tout en métal, de préférence tout en aluminium.

5. Agencement de fixation selon l'une quelconque des revendications 1 à 4, **caractérisé en ce que** le cadre (2) présente une traverse (2d) comportant une ouverture en forme de boîte, ouverture dans laquelle est logé le premier bac collecteur (1b) de l'échangeur de chaleur (1), et **en ce que** le second bac collecteur (1c) est tenu par la cornière (4, 5) de l'entretoise transversale (2g) et par l'élément d'encliquetage (3).
